# EUROPÄISCHE PATENTSCHRIFT

(11) **EP 1 736 333 B1**
(45) Veröffentlichungstag und Bekanntmachung des Hinweises auf die Patenterteilung: **10.11.2010**
(21) Anmeldenummer: 06012845.1
(22) Anmeldetag: 22.06.2006
(51) Int. Cl.: B60H 1/00, B60H 1/32

(54) **Klimatisierungs-Dachmodul für ein Kraftfahrzeug**
Roof-mounted vehicle air conditioning module
Module de climatisation fixé au toit d'un véhicule

(30) Priorität: 22.06.2005 DE 102005028890
(43) Veröffentlichungstag der Anmeldung: 27.12.2006
(73) Patentinhaber: Spheros GmbH, 82205 Gilching (DE)
(72) Erfinder: Scheid, Helmut, 86920 Denklingen (DE); Nicolodi, Ulrich, 82266 Inning (DE)
(74) Vertreter: Strasser, Wolfgang

(56) Entgegenhaltungen:
- DE-A1- 3 318 708
- DE-U1- 8 133 960
- FR-A- 2 851 197
- US-A1- 2003 037 912
- US-B1- 6 295 826

## Beschreibung

Die Erfindung betrifft ein Klimatisierungs-Dachmodul der im Oberbegriff von Anspruch 1 genannten Art.

Ein solches Klimatisierungs-Dachmodul, das jedoch nur für eine Verwendung in einem Personenkraftwagen geeignet ist, ist beispielsweise aus der DE 40 37 133 al bekannt. Bei diesem Modul ist zwischen dem Wagendach und der Dachinnenverkleidung eine Verdampfer-Gebläseeinheit eingebaut, die aus einem Ringwärmetauscher und einem konzentrisch angeordneten Radialgebläse mit vertikaler Rotationsachse besteht. Zentral unter dem Gebläse befindet sich in der Dachinnenverkleidung eine Ansaugöffnung, durch die hindurch das Gebläse Umluft aus dem Fahrzeuginnenraum absaugen kann, die dann durch den Ringwärmetauscher gedrückt wird. Damit die so klimatisierte Luft in den Fahrzeuginnenraum zurückgeleitet werden kann, sind in der Dachinnenverkleidung Austrittsöffnungen vorgesehen, zu denen die Luft durch Luftleitkanäle strömt, die zwischen dem Wagendach und der Dachinnenverkleidung im wesentlichen horizontal verlaufen. Werden bei dieser bekannten Anordnung zur Vermeidung von Strömungskurzschlüssen zwischen angesaugter und zurückgeführter Luft die Austrittsöffnungen in vergleichsweise großer Entfernung von der Ansaugöffnung angeordnet, so entsteht unmittelbar unter der Verdampfer-Gebläseeinheit ein Totraum, in den konditionierte Luft allenfalls nur nach Verwirbelung an den Seitenwänden des Fahrzeuginnenraums gelangt. Außerdem führen die dann entsprechend langen Luftleitkanäle und die vergleichsweise engen Austrittsöffnungen zu Druckverlusten, die durch eine erhöhte Gebläseleistung ausgeglichen werden müssen. Eine wirklich gleichmäßige Verteilung der konditionierten Luft ist insbesondere bei größeren Fahrzeuginnenräumen nicht gewährleistet.

Ein Klimatisierungs-Dachmodul zum Heizen und/oder Kühlen eines Kraftfahrzeuginnenraums, insbesondere eines Businnenraums, mit zumindest einem Radialgebläse, das dazu ausgelegt ist, dem Kraftfahrzeuginnenraum konditionierte Luft zuzuführen, wird beispielsweise von Webasto unter dem Handelsnamen "Aerosphere" vertrieben. Bei dieser Anlage befinden sich im Dachaufbau als Komponenten des Kältekreislaufs unter anderem ein Kondensator, zwei Expansionsorgane und zwei Verdampfer, einer je Busseite. Der Kompressor ist im Motorraum des Busses angeordnet und über zwei Kältemittelleitungen mit der Aufdachanlage verbunden. Je nach Position der Aufdachanlage kann die Länge dieser Leitungen mehr als 15 Meter betragen. Der Kompressor ist über einen Riementrieb und über eine Kupplung (Antriebsleistung ca. 60 Watt) mit dem Fahrzeugmotor verbunden. Seine Drehzahl ist damit abhängig von der Drehzahl des Fahrzeugmotors. Um die im Kondensator anfallende Wärmeenergie in die Umgebung zu leiten, wird mit Hilfe von 4 und mehr Axialgebläsen, deren Antriebsleistung jeweils ca. 240 Watt beträgt, Umgebungsluft durch die Kondensatoren gesaugt. Die für die Konditionierung des Fahrgastraumes vorgegebene Luft (je nach Stellung der Luftklappen Umluft, Frischluft oder eine Mischung aus beiden) wird mit sechs Doppelradialgebläsen (drei je Busseite, Antriebsleistung jeweils ca. 280 Watt, Ausblasgeschwindigkeit der Luft ca. 15 m/s) durch die Verdampfer gesaugt und unmittelbar nach den Gebläsen umgelenkt und in Luftkanäle geleitet. Ober diese Luftkanäle wird die konditionierte Luft in der Längsrichtung des Busses verteilt und anschließend durch Ausströmer in Richtung Fenster und Fahrzeugmitte im Fahrzeug verteilt. Bei Außentemperaturen von über 30 °C ist für eine Klimatisierung des Fahrgastraumes eine hohe Kühlleistung notwendig. Bei nicht so hohen Außentemperaturen ist die Leistung der Anlage aber so groß, dass im Fahrgastraum zu niedrige Temperaturen entstehen würden. Um dies zu verhindern, kann die Anlage getaktet betrieben werden. Zur Vermeidung von zu niedrigen Temperaturen und auch zu Heizzwecken bei niedrigen Außentemperaturen sind nach den Verdampfern Wärmetauscher angeordnet, die über eine Pumpe (Antriebsleistung ca. 209 Watt) mit Motorkühlflüssigkeit versorgt werden und die die Luft (wieder) so anwärmen, dass die gewünschte Fahrgastraumtemperatur erreicht wird. Mit einer derartigen Anordnung der Komponenten ist auch eine Entfeuchtung der Luft möglich (reheat-Betrieb).

Die gesamte Antriebsleistung solcher Klimatisierungs-Dachmodule muss durch den Fahrzeugmotor unter Aufwendung von Kraftstoff erzeugt werden.

Der Erfindung liegt die Aufgabe zugrunde, ein Klimatisierungs-Dachmodul der eingangs erwähnten Art derart weiterzubilden, dass insgesamt eine geringere Antriebsleistung erforderlich ist und somit der Kraftstoffverbrauch gesenkt wird.

Diese Aufgabe wird durch die Merkmale des Anspruchs 1 gelöst.

Vorteilhafte Ausführungsformen und Weiterbildungen der Erfindung ergeben sich aus den abhängigen Ansprüchen.

Das erfindungsgemäße Klimatisierungs-Dachmodul baut auf dem Stand der Technik auf, der Luftauslässe aufweist, die so angeordnet sind, dass zumindest ein Teil der dem Kraftfahrzeuginnenraum von dem Radialgebläse zugeführten Luft ohne Umlenkung aus diesen Auslässen austritt. In erfindungsgemäßer Weiterbildung dieser Anordnung ist vorgesehen, dass ein oberhalb des Fahrzeugdaches liegender Verdampfer den Ansaugbereich des Radialgebläses zumindest abschnittsweise gibt, wobei dieser Ansaugbereich durch röhrenförmige, um das Radialgebläse herum angeordnete Umluftansaugkanäle mit dem Kraftfahrzeuginnenraum verbunden ist, und dass zumindest einige der Auslässe durch Zwischenräume zwischen Umluftansaugkanälen gebildet sind.

Diese Lösung ermöglicht es, dass in geringerem Maße durch Temperatur, dafür hauptsächlich durch Luftbewegung mit geringem Energieaufwand eine möglichst große Wirkung in Bezug auf das Behaglichkeitsempfinden der Fahrgäste erreicht wir. Dadurch, dass zumindest ein Teil der dem Kraftfahrzeuginnenraum von dem Radialgebläse zugeführten Luft ohne Umlenkung aus den Auslässen austritt, werden Druckverluste minimiert, so dass die zum Betrieb des erfindungsgemäßen Klimatisierungs-Dachmoduls insgesamt erforderliche Antriebsleistung im Vergleich zum Stand der Technik geringer ist, was letztendlich den Kraftstoffverbrauch senkt.

Dadurch, dass zumindest einige der Auslässe durch Zwischenräume zwischen Umluftansaugkanälen gebildet sind, strömt nach dem Austritt aus den Auslässen die konditionierte Luft entlang des Kraftfahrzeugdaches und fällt im Falle eines Busses beispielsweise als kühle Luftdusche direkt auf die Fahrgäste, was eine sehr effiziente Kühlung des Kraftfahrzeuginnenraums bei geringem Aufwand ermöglicht.

Im vorstehend erläuterten Zusammenhang ist vorzugsweise weiterhin vorgesehen, dass zumindest einige der Umluftansaugkanäle zumindest abschnittsweise durch aerodynamisch geformte Röhren gebildet sind. Nach dem Austritt der konditionierten Luft aus dem Radialgebläse wird die konditionierte Luft bei dieser Lösung auf der Außenseite der aerodynamisch geformten und an die Ausblasrichtung des Gebläses angepassten Umluftansaugröhren vorbeigeführt, beispielsweise an die Unterseite eines Busdaches. Dabei entstehen nur sehr geringe Druckverluste, was sich ebenfalls vorteilhaft auf die erforderliche Antriebsleistung auswirkt.

Gemäß einer besonders bevorzugten Weiterbildung des erfindungsgemäßen Klimatisierungs-Dachmoduls ist vorgesehen, dass das Radialgebläse einen ringspaltförmigen Ausblas aufweist. Ein derartiges Radialgebläse führt zu einer großen Luftaustrittsquerschnittsfläche, was sehr niedrige Luftgeschwindigkeiten ergibt. Dadurch können der dynamische Druckanteil und damit die Verluste um beispielsweise 110 Pa geringer als bei bekannten Klimatisierungs-Dachmodulen sein. Weiterhin entspricht die Strömungsrichtung der konditionierten Luft nach dem Austritt aus dem Radialgebläse bereits der für die Verteilung im Fahrzeug erforderlichen Strömungsrichtung, so dass zumindest im Wesentlichen keine Umlenkung der Luft erforderlich ist.

Der oberhalb des Fahrzeugdaches angeordnete Verdampfer kann U-förmig ausgebildet sein, insbesondere derart, dass sich das Radialgebläse zwischen den Schenkeln des U befindet. Ein derartiger Verdampfer ergibt bei geringem Platzbedarf eine große Wärmetauscheroberfläche, was die Druckverluste bei der Konditionierung der Luft minimiert. Dies ist insbesondere vorteilhaft, wenn die zu konditionierende Luft dem Verdampfer über dessen Oberfläche möglichst gleichmäßig verteilt zugeführt wird. Dies kann beispielsweise über eine geeignet angeordnete Anzahl von Umluftansaugkanälen und eine Anzahl von geeignet angeordneten Frischluftansaugöffnungen erreicht werden.

Bei bevorzugten Ausführungsformen des erfindungsgemäßen Klimatisierungs-Dachmoduls ist weiterhin vorgesehen, dass es einen Kondensator aufweist, der einen Abschnitt eines Gehäuses des Klimatisierungs-Dachmoduls bildet. Der Kondensator ist dabei vorzugsweise so angeordnet, dass die Wärmeabfuhr durch den Fahrtwind unterstützt wird. Wenn die Oberfläche des Kondensators entsprechend vergrößert beziehungsweise an die Gehäuseform angepasst wird, kann zumindest in einigen Fällen auf ein Kondensatorgebläse vollständig verzichtet werden.

Zusätzlich oder alternativ kann bei dem erfindungsgemäßen Klimatisierungs-Dachmodul vorgesehen sein, dass es einen Kondensator aufweist, dem ein Kondensatorgebläse zugeordnet ist, dessen Drehzahl bei einer ausreichenden Durchströmung des Kondensators mit Fahrtwind reduzierbar ist. Eine ausreichende Durchströmung des Kondensators mit Fahrtwind kann beispielsweise durch eine Überdruckklappe unterstützt werden, die es im geöffneten Zustand ermöglicht, dass aus dem Kondensator austretende Luft nicht über das Kondensatorgebläse sondern durch die geöffnete Überdruckklappe abgeführt wird. Auf diese Weise kann die Wärmeabfuhr zumindest in einigen Fällen so optimiert werden, dass das Kondensatorgebläse bei schneller Fahrt vollständig abgeschaltet werden kann.

Bei bevorzugten Ausführungsformen des erfindungsgemäßen Klimatisierungs-Dachmoduls ist vorgesehen, dass es einen Kompressor aufweist, der von einem Elektromotor angetrieben wird. Zum Antrieb des Kompressors kann beispielsweise ein 24 V EC-Motor verwendet werden, der vorzugsweise direkt mit dem Verdichter verbunden ist und dessen Drehzahl vorzugsweise stufenlos geregelt werden kann. Dadurch ist die Leistung des erfindungsgemäßen Klimatisierungs-Dachmoduls nicht von der Drehzahl des Antriebsmotors des Kraftfahrzeuges abhängig und es steht beispielsweise auch im Leerlauf des Antriebsmotors die volle Klimaleistung zur Verfügung.

Im vorstehend erläuterten Zusammenhang kann weiterhin vorgesehen sein, dass das erfindungsgemäße Klimatisierungs-Dachmodul eine wiederaufladbare Batterie aufweist, die dazu vorgesehen ist, vom Bordnetz eines Kraftfahrzeuges gespeist zu werden. Dadurch kann das erfindungsgemäße Klimatisierungs-Dachmodul zumindest kurzfristig auch dann betrieben werden, wenn der Antriebsmotor des Kraftfahrzeugs abgeschaltet ist, ohne die Kraftfahrzeugbatterie zu belasten. Das Laden der wiederaufladbaren Batterie erfolgt vorzugsweise, wenn der Leistungsbedarf des KLimatisierungs-Dachmodul vergleichsweise gering ist.

Gemäß einer ebenfalls bevorzugten Weiterbildung des erfindungsgemäßen Klimatisierungs-Dachmoduls kann vorgesehen sein, dass es einen Controller aufweist, der aus ihm zugeführten Messwerten auf eine gefühlte Temperatur schließt. Die gefühlte Temperatur wird durch die Strömungsgeschwindigkeit und die Temperatur der konditionierten Luft beeinflusst. Zur Erfassung dieser Größen können geeignete Sensoren vorgesehen sein. Die Einbeziehung der gefühlten Temperatur in die Steuerung beziehungsweise Regelung des erfindungsgemäßen Klimatisierungs-Dachmoduls ist insbesondere Vorteilhaft, weil erfindungsgemäß vorzugsweise hauptsächlich durch die Luftbewegung und weniger durch die Lufttemperatur gekühlt wird.

Das erfindungsgemäße Klimatisierungs-Dachmodul kann in vorteilhafter Weise dadurch weitergebildet sein, dass es eine Funkschnittstelle aufweist. Auf diese Wiese ist es möglich, das Klimatisierungs-Dachmodul über eine drahtlose Fernbedienung zu bedienen, so dass auf entsprechende Steuerleitungen verzichtet werden kann, was den Einbau deutlich kostengünstiger macht.

Ein wesentlicher Grundgedanke besteht darin, dass in geringerem Maße durch Temperatur dafür hauptsächlich durch Luftbewegung mit geringem Energieaufwand eine möglichst große Wirkung in Bezug auf das Behaglichkeitsempfinden der Fahrgäste erreicht wird. Dies wird durch eine Auswahl und Anordnung der Komponenten, die auf möglichst geringe luftseitige Druckverluste, hohe Integration und kompakte Baugröße optimiert ist, ermöglicht. In das Klimatisierungs-Dachmodul integriert ist die Umluftansaugung direkt aus dem Fahrgastraum in aerodynamisch ausgeformten Röhren, die eine gleichmäßige Beaufschlagung des gebogenen Verdampfers ermöglichen. Durch die gebogene Form des Verdampfers ist eine große Wärmeaustauschfläche in kleinstem Bauraum und mit geringstem luftseitigen Druckverlusten möglich. Nach Behandlung der Luft im Verdampfer erfolgt mit geringsten Druckverlusten die Umlenkung der Luft zum Radialgebläse. Das Radialgebläse ermöglicht bei minimalen dynamischen Druckverlusten und ohne Umlenkung der Luft eine Verteilung der Luft direkt dorthin wo diese benötigt wird.

Eine bevorzugte Ausführungsform wird nachfolgend anhand der zugehörigen Zeichnungen beispielhaft erläutert.

Es zeigen:
- Figur 1: eine perspektivische Ansicht einer Ausführungsform eines auf ein Busdach montierten Klimatisierungs-Dachmoduls;

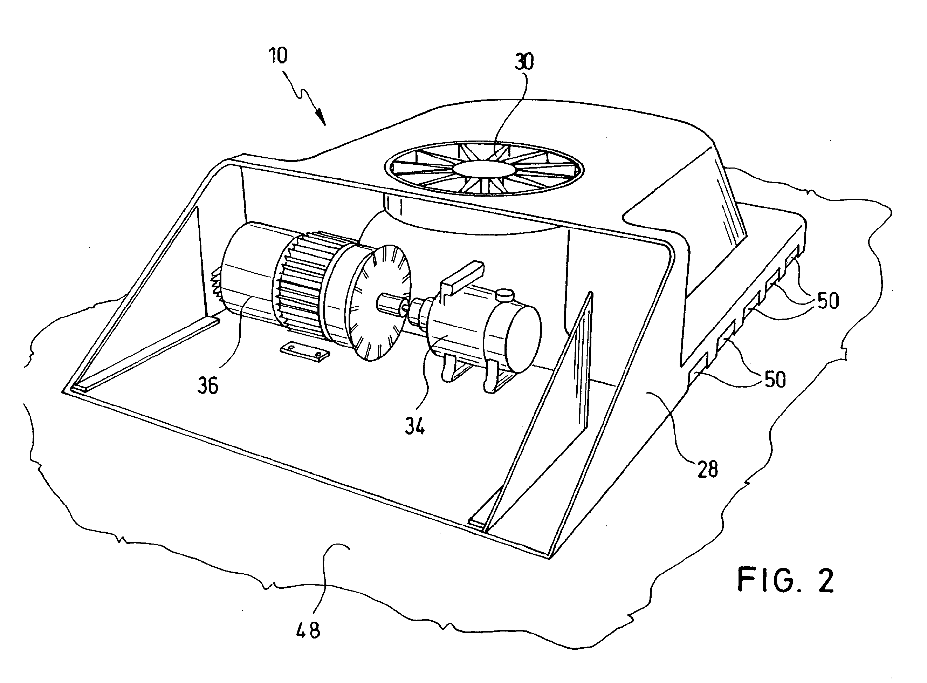

- Figur 2: eine weitere perspektivische Ansicht des Klimatisierungs-Dachmoduls von Figur 1 mit demontiertem Kondensator;

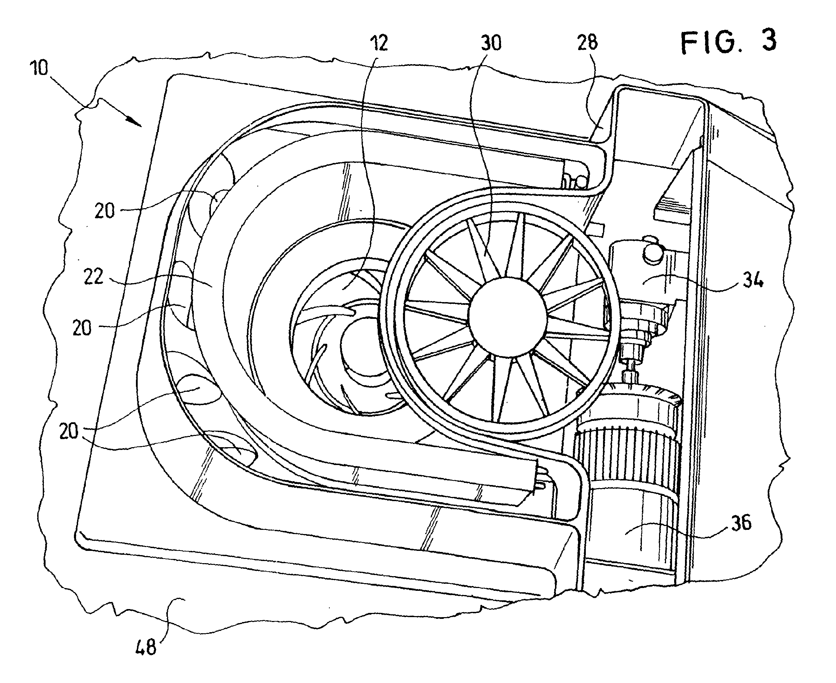

- Figur 3: einen Blick von oben in das Innere des Klimatisierungs-Dachmoduls von Figur 1;
- Figur 4: eine perspektivische Darstellung der in den Innenraum des Busses ragenden Unterseite des Klimatisierungs-Dachmoduls von Figur 1;

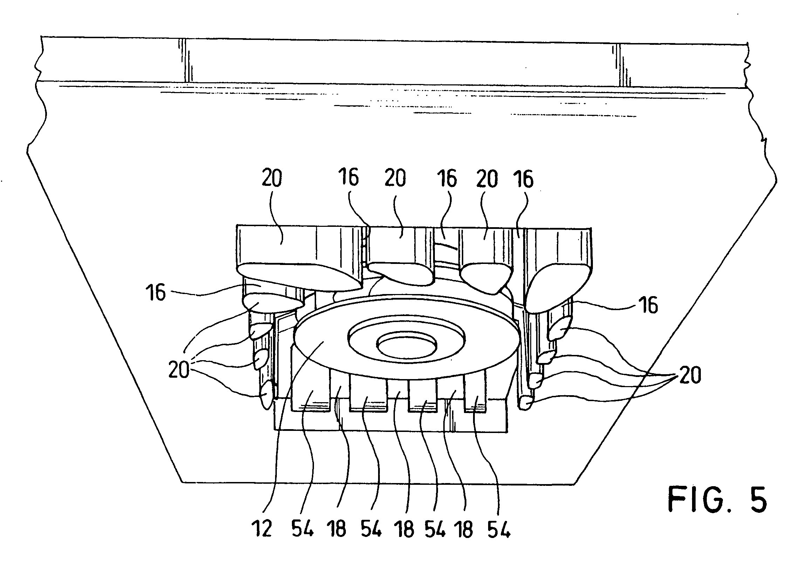

- Figur 5: eine weitere perspektivische Darstellung der in das Innere des Busses ragenden Unterseite des Klimatisierungs-Dachmoduls von Figur 1 mit abgenommener Abdeckplatte;
- Figur 6: eine weitere perspektivische Darstellung der in das Innere des Busses ragenden Unterseite des Klimatisierungs-Dachmoduls von Figur 1 mit abgenommener Abdeckplatte;

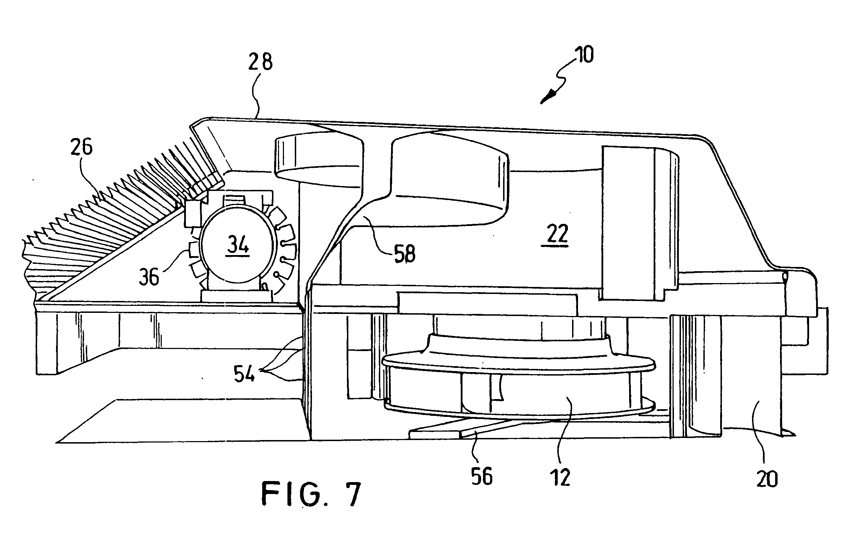

- Figur 7: eine perspektivische Seitenschnittansicht des Klimatisierungs-Dachmoduls von Figur 1;
- Figur 8: eine perspektivische Querschnittsansicht des Klimatisierungs-Dachmoduls von Figur 1;

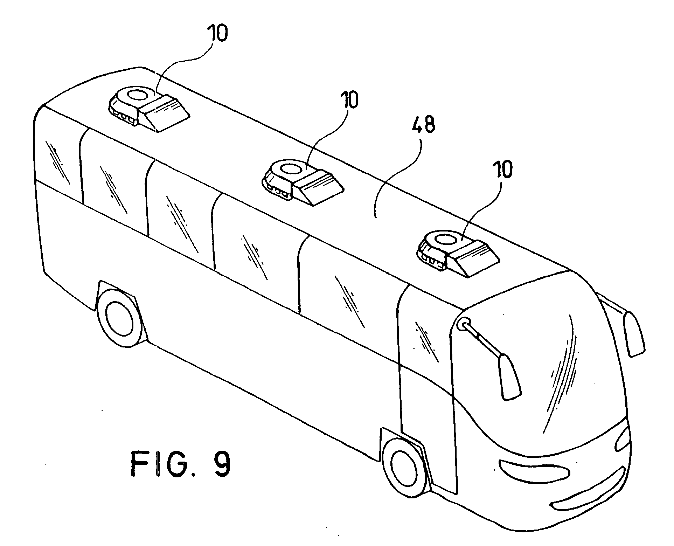

- Figur 9: einen Bus, der mit drei Klimatisierungs-Dachmodulen ausgestattet ist, wobei jedes dieser Module der in den Figuren 1 bis 8 gezeigten Ausführungsform entspricht; und
- Figur 10: eine die Ausströmung der konditionierten Luft veranschaulichende Draufsicht auf die Unterseite des Klimatisierungs-Dachmoduls von Figur 1 bei abgenommener Abdeckplatte sowie weitere Komponenten in Blockschaltbilddarstellung.

In den Figuren bezeichnen gleiche Bezugszeichen gleiche Komponenten, die zur Vermeidung von Wiederholungen zumindest teilweise nur einmal erläutert werden.

Das in den Figuren dargestellte Klimatisierungs-Dachmodul 10 ist modular aufgebaut, was bedeutet, das je nach Leistungsanforderung eine entsprechende Anzahl von Modulen beispielsweise auf einem Busdach positioniert werden können. Als Schnittstelle zum Bus sind lediglich ein Ausschnitt von der Größe einer Dachluke im Busdach und die Versorgung mit 24 V erforderlich. Jedes Klimatisierungs-Dachmodul 10 beinhaltet alle für die Klimatisierung erforderlichen Komponenten und ist für sich autark.

Das dargestellte Klimatisierungs-Dachmodul 10 weist einen Kältekreislauf auf, der einen von einem Elektromotor 36 angetriebenen Kompressor 34, einen Verdampfer 22, dem ein nicht näher dargestelltes Expansionsorgan zugeordnet ist, und einen Kondensator 26 umfasst. Der Verdampfer 22 ist gebogen ausgeführt, damit bei möglichst geringem Platzbedarf eine möglichst große Wärmetauscheroberfläche bei geringsten luftseitigen Druckverlusten erreicht werden kann. Gegebenenfalls kann die Leistungsziffer des Kältekreislaufs in an sich bekannter Weise durch einen inneren Wärmetauscher und durch eine Unterkühlung des verflüssigten Kältemittels am Verdampfer erhöht werden. Für die Beheizung des Kraftfahrzeuginnenraums kann der Kältekreislauf durch eine Heizgasbypassschaltung umgedreht werden, wie dies ebenfalls bekannt ist. Damit steht die Kompressorleistung als Heizleistung im Verdampfer zur Verfügung. Zusätzlich oder alternativ kann eine elektrische Heizeinrichtung vorgesehen sein, beispielsweise ein Elektroheizregister (PTC), um die zu konditionierende Luft zu erwärmen. Dem Verdampfer 22 ist ein von einer Radialgebläsehalterung 56 gehaltertes Radialgebläse 12 mit großem Durchmesser zugeordnet, das als Ausblas einen kompletten Ringspalt aufweist. Der Ansaugbereich 24 des Radialgebläses 12 steht strömungstechnisch mit einer Mehrzahl von Frischluftansaugöffnungen 50 in Verbindung, die in dem Gehäuse 28 des Klimatisierungs-Dachmoduls 10 in der Nähe des Busdachs 48 vorgesehen sind.

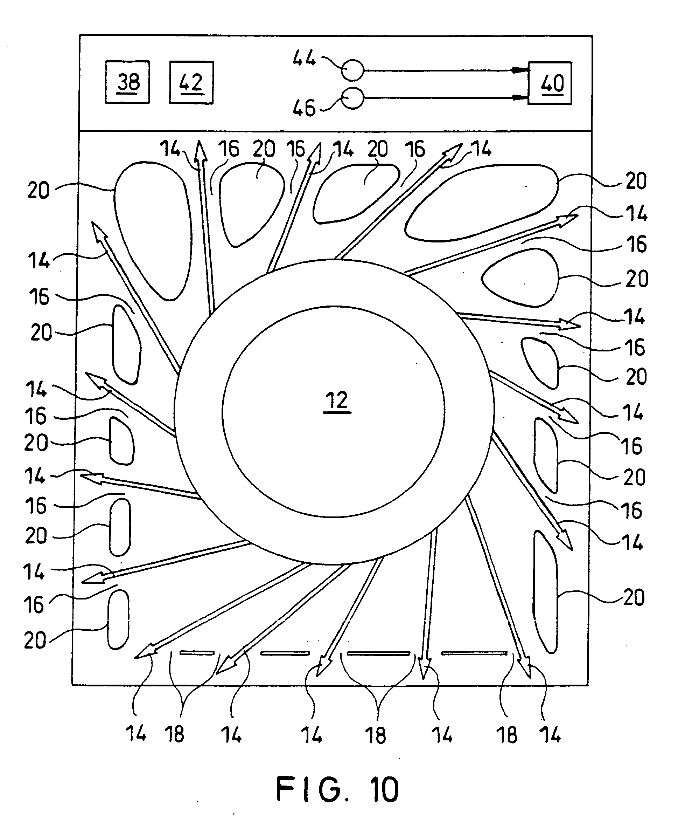

Weitere Komponenten des erfindungsgemäßen Klimatisierungs-Dachmoduls sind in Figur 10 in Form von Blocksymbolen dargestellt. So ist eine wiederaufladbare Batterie 38 vorgesehen, die als Batterie-Pufferspeicher dient, der geladen wird, wenn der Leistungsbedarf gering ist und der den Betrieb des Klimatisierungs-Dachmoduls 10 auch dann ermöglicht, wenn der Antriebsmotor des Busses abgeschaltet ist. Weiterhin ist eine Funkschnittstelle 43 vorgesehen, die eine drahtlose Fernbedienung des Klimatisierungs-Dachmoduls 10 ermöglicht. Ein Controller 40, der beispielsweise auf Mikroprozessorbasis ausgebildet sein kann, steht mit einem Strömungssensor 44 und einem Temperatursensor 46 in Verbindung, die benachbart zu einem der Luftauslässe 16 angeordnet sind. Der Controller 40 kann unter anderem aus den von den Sensoren 44, 46 gelieferten Signalen auf eine so genannte "gefühlte Temperatur" schließen und diese bei der Regelung beziehungsweise Steuerung des Klimatisierungs-Dachmoduls 10 berücksichtigen.

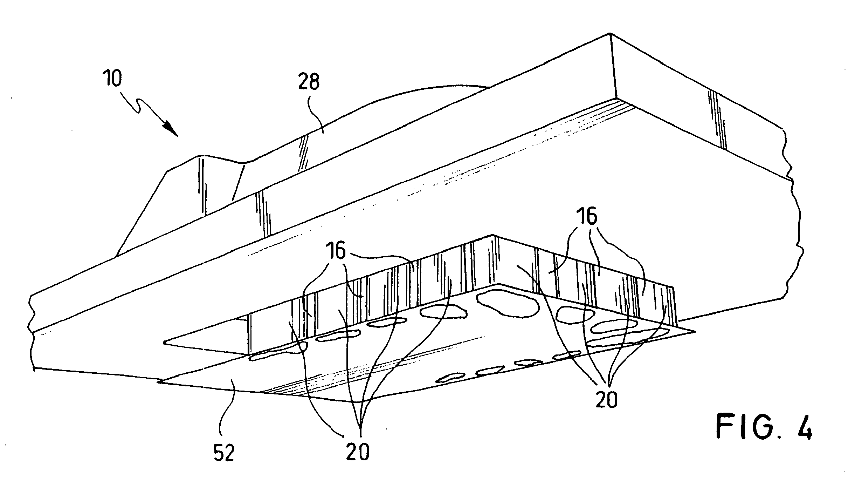

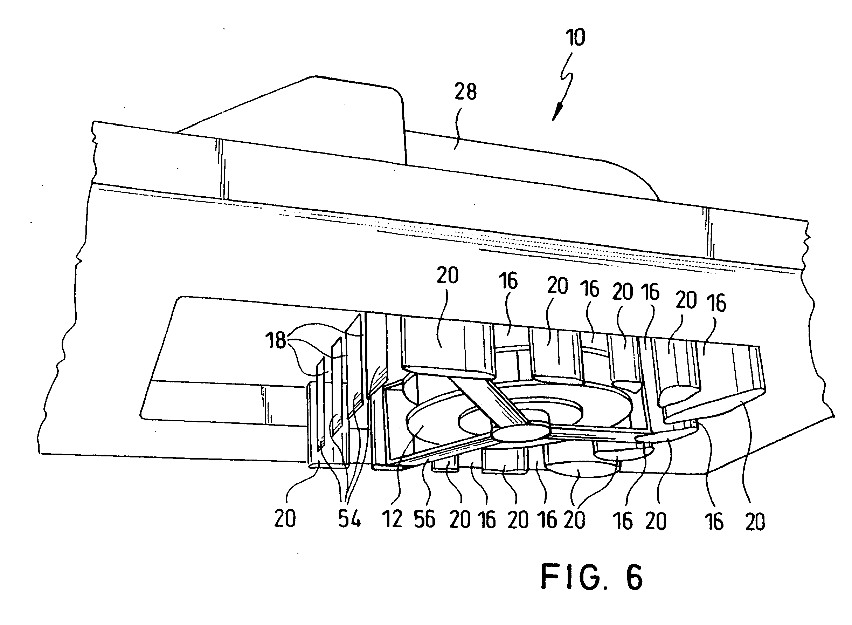

Um das Radialgebläse herum ist eine Mehrzahl von Umluftsaugkanälen 20 angeordnet, die durch aerodynamisch geformte Röhren gebildet sind. Die Zwischenräume zwischen diesen Umluftansaugkanälen 20 bilden Luftauslässe 16, aus denen zumindest ein Teil der dem Kraftfahrzeuginnenraum zugeführten Luft ohne Umlenkung austreten kann. Weitere Luftauslässe 18 werden durch die Zwischenräume zwischen Leitelementen 54 gebildet (siehe beispielsweise Figur 6) die im vorderen Bereich des Klimatisierungs-Dachmoduls 10 vorgesehen sind. Eine Abdeckplatte 52, die am besten an Figur 4 zu erkennen ist, weist Durchbrüche auf, die mit der jeweiligen Form der Umluftansaugkanäle 20 korrespondieren.

Der Ansaugbereich 24 des Radialgebläses 12 ist durch eine Trennwand 58 von einem Raum getrennt, in dem der Elektromotor 36 und der Kompressor 34 angeordnet sind. Dieser Raum wird zum Teil von dem Kondensator 26 begrenzt, der in das Gehäuse 28 des Klimatisierungs-Dachmoduls 10 integriert ist beziehungsweise einen Teil dieses Gehäuses 28 bildet. Dem Kondensator 26 ist ein Kondensatorgebläse 30 zugeordnet, bei dem es sich um ein Axialgebläse handelt.

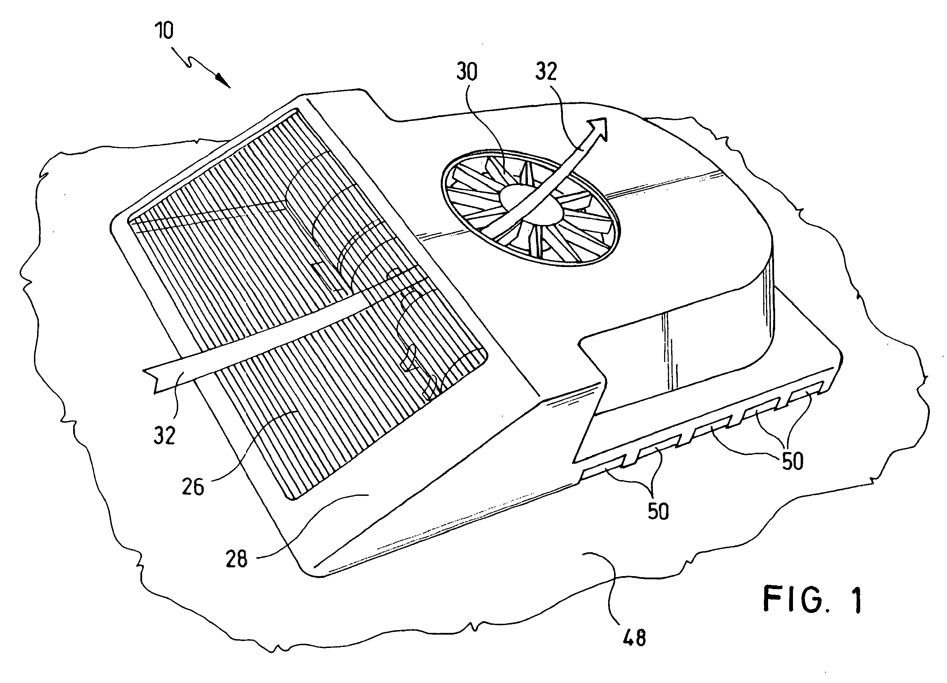

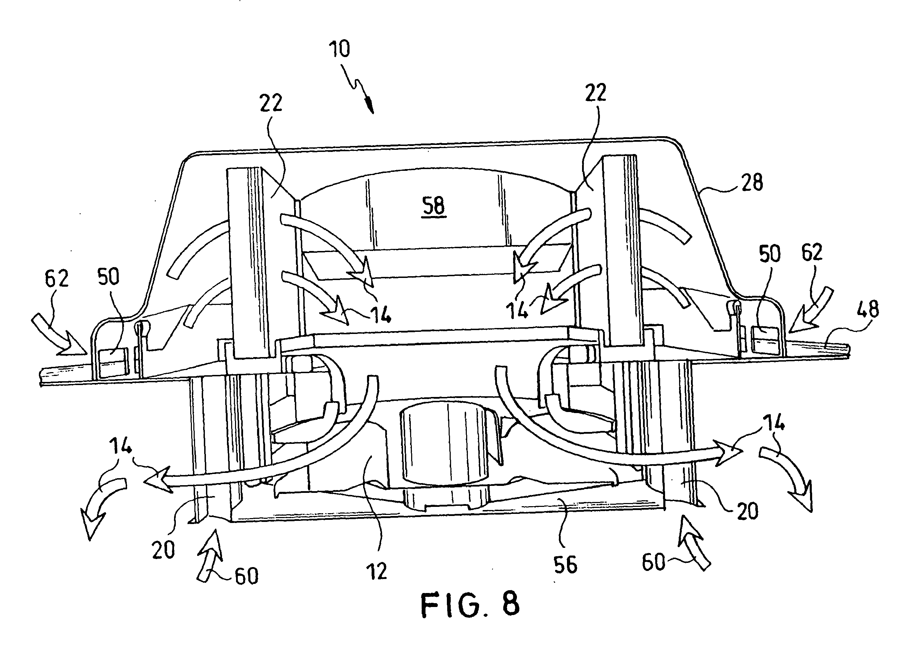

Nachfolgend wird auf die Funktionsweise des erfindungsgemäßen Klimatisierungs-Dachmoduls 10 näher eingegangen, wobei die Strömungsverhältnisse insbesondere den Figuren 1, 8 und 10 entnommen werden können. Durch das Radialgebläse 12 wird aus dem Innenraum des Busses über die Umluftansaugkanäle 20 Umluft 60 angesaugt. Anschließend wird ein fester Anteil (beispielsweise 20 %) von Frischluft 62 zugemischt, bevor die Luft zur Kühlung durch den Verdampfer 22 geleitet wird. Nach dem Verdampfer wird die konditionierte Luft 14 bei niedriger Geschwindigkeit und geringsten Druckverlusten in Richtung zum Radialgebläse 12 umgelenkt. Im Radialgebläse 12 erfolgt bei der Druckerhöhung gleichzeitig eine Umlenkung in die radiale Richtung. Nach dem Austritt der konditionierten Luft 14 aus dem Radialgebläse 12 ist bereits eine Strömungsrichtung vorhanden, wie sie für die Verteilung im Kraftfahrzeuginnenraum benötigt wird, was insbesondere Figur 10 zu entnehmen ist. Diese Figur 10 veranschaulicht auch, die aerodynamische Form der Umluftansaugkanäle 20, die gewährleistet, dass der Luftanteil, der nicht direkt auf die Luftauslässe 16, 18 gerichtet ist, mit minimalen Druckverlusten so umgelenkt wird, dass er aus den Luftauslässen 16, 18 ausströmen kann. Der Darstellung von Figur 10 ist weiterhin deutlich zu entnehmen, dass zumindest ein Teil der dem Kraftfahrzeuginnenraum zugeführten konditionierten Luft 14 ohne jegliche Umlenkung aus den Luftauslässen 16, 18 austritt. Anschließend fällt die konditionierte Luft entlang des Busdaches beispielsweise als kühle Luftdusche direkt auf die Fahrgäste und ermöglicht so eine sehr effiziente Kühlung des Innenraums. Das Radialgebläse 12 ist in seiner Drehzahl stufenlos regelbar. Somit kann die Luftmenge den Bedarf der Fahrgäste angepasst werden. Außerdem kann dem wesentlich geringeren Bedarf an Luftmenge im Heizfall Rechnung getragen werden.

Der Kondensator 26 ist so in das Gehäuse 28 integriert, dass die Wärmeabfuhr durch den Fahrtwind 32 (siehe Figur 1) zusätzlich unterstützt wird. Dadurch ergibt sich die Möglichkeit, die Drehzahl des Kondensatorgebläses 30 bei Fahrt zu reduzieren. Der Kompressor 34 und der direkt mit diesem verbundene Elektromotor 36 sind im Abluftstrom des Kondensators 26 angeordnet, so dass die aus dem Kondensator 26 austretende Luft zur Kühlung dieser Komponenten verwendet wird. Bei dem Elektromotor 36 kann es sich insbesondere um einen EC-Motor mit der Möglichkeit der stufenlosen Drehzahlregelung handeln. Für das Kondensatorgebläse 30 und/oder das Radialgebläse 12 können ebenfalls entsprechende EC-Motoren vorgesehen sein.

Das erfindungsgemäße Klimatisierungs-Dachmodul 10 kann insbesondere so ausgelegt werden, dass die Leistung und Effizienz der Anlage für mitteleuropäische Temperaturverhältnisse, das heißt beispielsweise Umgebungstemperaturen von maximal 27 - 30 °C, optimiert ist. Für den Sonderfall höherer Temperaturen kann gegebenenfalls eine Leistungsreduzierung durch Drehzahlreduzierung am Elektromotor 36 vorgesehen sein. Vorzugsweise wird das Klimatisierungs-Dachmodul 10 mit Kältemittel gefüllt und "steckerfertig" ausgeliefert. Der Einbau kann in einfacher Weise über eine "genormte" Schnittstelle (beispielsweise Busluke) einfach und mit geringer Fehlerwahrscheinlichkeit durchgeführt werden.

Die in der vorstehenden Beschreibung, Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Klimatisierungs-Dachmodul
- 12: Radialgebläse
- 14: konditionierte Luft
- 16: Luftauslässe
- 18: Luftauslässe
- 20: Umluftansaugkanäle
- 22: Verdampfer
- 24: Ansaugbereich des Radialgebläses
- 26: Kondensator
- 28: Gehäuse
- 30: Kondensatorgebläse
- 32: Fahrtwind
- 34: Kompressor
- 36: Elektromotor
- 38: wiederaufladbare Batterie
- 40: Controller
- 42: Funkschnittstelle
- 44: Strömungssensor
- 46: Temperatursensor
- 48: Busdach
- 50: Frischluftansaugöffnungen
- 52: Abdeckplatte
- 54: Leitelemente
- 56: Radialgebläsehalterung
- 58: Trennwand
- 60: Umluft
- 62: Frischluft

## Patentansprüche

1. Klimatisierungs-Dachmodul (10) zum Heizen und/oder Kühlen eines Kraftfahrzeuginnenraums, insbesondere eines Businnenraums, mit zumindest einem Radialgebläse (12), das dazu ausgelegt ist, dem Kraftfahrzeuginnenraum konditionierte Luft (14) zuzuführen, wobei sich im montierten Zustand die Rotationsachse des Radialgebläses (12) in etwa senkrecht zur Ebene des Fahrzeugdaches (48) erstreckt und das Radialgebläse (12) soweit unter die Unterseite des Fahrzeugdaches (48) in den Kraftfahrzeuginnenraum hinein vorsteht, dass sich der Ausblasbereich des Radialgebläses (12) im Kraftfahrzeuginnenraum befindet, wodurch zumindest ein Teil der durch die Luftauslässe (16, 18) des Ausblasbereichs austretenden Luft ohne Umlenkung in den Kraftfahrzeuginnenraum gelangt, **dadurch gekennzeichnet, dass**
der Ansaugbereich (24) des Radialgebläses (12) zumindest abschnittsweise von einem oberhalb des Fahrzeugdaches liegenden Verdampfer (22) umgeben und durch röhrenförmige, um das Radialgebläse (12) herum angeordnete Umluftansaugkanäle (20) mit dem Kraftfahrzeuginnenraum verbunden ist, und dass zumindest einige der Luftauslässe (16) durch Zwischenräume zwischen den Umluftansaugkanälen (20) gebildet sind.

2. Klimatisierungs-Dachmodul (10) nach Anspruch 1, **dadurch gekennzeichnet, dass** zumindest einige der röhrenförmigen Umluftansaugkanäle (20) zumindest abschnittsweise durch eine aerodynamische Form an die Ausblasrichtung des Radialgebläses (12) angepasst sind.

3. Klimatisierungs-Dachmodul (10) nach einem der vorhergehenden Ansprüche, **dadurch gekennzeichnet, dass** der Ausblasbereich des Radialgebläses (12) ringspaltförmig ausgebildet ist.

4. Klimatisierungs-Dachmodul (10) nach einem der vorhergehenden Ansprüche, **dadurch gekennzeichnet, dass** es einen Kondensator (26) aufweist, der einen Abschnitt eines Gehäuses (28) des Klimatisierungs-Dachmoduls bildet.

5. Klimatisierungs-Dachmodul (10) nach einem der vorhergehenden Ansprüche, **dadurch gekennzeichnet, dass** es einen Kondensator (26) aufweist, dem ein Kondensatorgebläse (30) zugeordnet ist, dessen Drehzahl bei einer ausreichenden Durchströmung des Kondensators (26) mit Fahrtwind (32) reduzierbar ist.

6. Klimatisierungs-Dachmodul (10) nach einem der vorhergehenden Ansprüche, **dadurch gekennzeichnet, dass** es einen Kompressor (34) aufweist, der von einem Elektromotor (36) angetrieben wird.

7. Klimatisierungs-Dachmodul (10) nach einem der vorhergehenden Ansprüche, **dadurch gekennzeichnet, dass** es eine wieder aufladbare Batterie (38) aufweist, die dazu vorgesehen ist, vom Bordnetz eines Kraftfahrzeuges gespeist zu werden.

8. Klimatisierungs-Dachmodul (10) nach einem der vorhergehenden Ansprüche, **dadurch gekennzeichnet, dass** es einen Controller (40) aufweist, der aus ihm zugeführten Messwerten auf eine gefühlte Temperatur schließt.

9. Klimatisierungs-Dachmodul (10) nach einem der vorhergehenden Ansprüche, **dadurch gekennzeichnet, dass** es eine Funkschnittstelle (42) aufweist.

## Claims

1. An air-conditioning roof module (10) for heating and/or cooling a vehicle interior, in particular a bus interior, comprising at least one radial fan (12) which is adapted to feed air-conditioned air (14) to the vehicle interior, wherein in the mounted condition the axis of rotation of the radial fan (12) extends substantially perpendicularly to the plane of the vehicle roof (48) and the radial fan (12) projects under the underside of the vehicle roof (48) into the vehicle interior to such an extent that the discharge region of the radial fan (12) is in the vehicle interior, whereby at least a part of the air issuing through the air outlets (16, 18) of the discharge region passes into the vehicle interior without deflection, **characterised in that**
the intake region (24) of the radial fan (12) is at least portion-wise surrounded by an evaporator (22) above the vehicle roof and is connected to the vehicle interior by tubular circulatory air intake passages (20) arranged around the radial fan (12), and at least some of the air outlets (16) are formed by intermediate spaces between the circulatory air intake passages (20).

2. An air-conditioning roof module (10) according to claim 1 **characterised in that** at least some of the tubular circulatory air intake passages (20) are adapted at least portion-wise by an aerodynamic shape to the discharge direction of the radial fan (12).

3. An air-conditioning roof module (10) according to one of the preceding claims **characterised in that** the discharge region of the radial fan (12) is in the form of an annular gap.

4. An air-conditioning roof module (10) according to one of the preceding claims **characterised in that** it has a condenser (26) forming a portion of a housing (28) of the air-conditioning roof module.

5. An air-conditioning roof module (10) according to one of the preceding claims **characterised in that** it has a condenser (26) with which there is associated a condenser fan (30), the rotary speed of which can be reduced with a sufficient through-flow through the condenser (26) with the airstream (32).

6. An air-conditioning roof module (10) according to one of the preceding claims **characterised in that** it has a compressor (34) driven by an electric motor (36).

7. An air-conditioning roof module (10) according to one of the preceding claims **characterised in that** it has a rechargeable battery (38) provided to be fed by the on-board power system of a motor vehicle.

8. An air-conditioning roof module (10) according to one of the preceding claims **characterised in that** it has a controller (40) which infers a sensed temperature from measurement values associated with the controller.

9. An air-conditioning roof module (10) according to one of the preceding claims **characterised in that** it has a radio interface (42).

## Revendications

1. Module de climatisation de toit (10) pour le chauffage et/ou le refroidissement d'un habitacle de véhicule automobile, en particulier un habitable d'autobus, avec au moins un ventilateur radial (12) prévu pour refouler de l'air conditionné (14) dans l'habitacle du véhicule, où, en état de montage, l'axe de rotation du ventilateur radial (12) s'étend sensiblement perpendiculairement au plan du toit du véhicule (48) et où le ventilateur radial (12) fait saillie dans l'habitacle du véhicule en dessous de la face inférieure du toit du véhicule (48), de telle manière que la zone de soufflage du ventilateur radial (12) se trouve à l'intérieur de l'habitacle du véhicule, où au moins une partie de l'air s'écoulant par les sorties d'air (16, 18) du ventilateur radial (12) parvient dans l'habitacle du véhicule sans être dévié, **caractérisé en ce que** la zone d'aspiration (24) du ventilateur radial (12) est entourée au moins partiellement par un évaporateur (22) situé au-dessus du toit du véhicule et est reliée à l'habitacle du véhicule par des canaux tubulaires d'aspiration d'air recyclé (20) disposés tout autour du ventilateur radial (12), et **en ce qu'**au moins quelques-unes des sorties d'air (16) sont formées par des interstices entre les canaux d'aspiration d'air recyclé (20).

2. Module de climatisation de toit (10) selon la revendication 1, **caractérisé en ce qu'**au moins quelques-uns des canaux tubulaires d'aspiration d'air recyclé (20) sont au moins partiellement adaptés à la direction de soufflage du ventilateur radial (12) au moyen d'une forme aérodynamique.

3. Module de climatisation de toit (10) selon l'une des revendications précédentes, **caractérisé en ce que** la zone de soufflage du ventilateur radial (12) est prévue sous forme de fente annulaire.

4. Module de climatisation de toit (10) selon l'une des revendications précédentes, **caractérisé en ce qu'**il comprend un condensateur (26) formant une partie d'un carter (28) du module de climatisation de toit.

5. Module de climatisation de toit (10) selon l'une des revendications précédentes, **caractérisé en ce qu'**il comprend un condensateur (26), auquel est affecté un ventilateur de condensateur (30), dont la vitesse de rotation peut être diminuée en cas d'exposition suffisante du condensateur (26) au vent relatif (32).

6. Module de climatisation de toit (10) selon l'une des revendications précédentes, **caractérisé en ce qu'**il comprend un compresseur (34) entraîné par un moteur électrique (36).

7. Module de climatisation de toit (10) selon l'une des revendications précédentes, **caractérisé en ce qu'**il comprend une batterie rechargeable (38) prévue pour être alimentée par le réseau de bord d'un véhicule automobile.

8. Module de climatisation de toit (10) selon l'une des revendications précédentes, **caractérisé en ce qu'**il comprend un contrôleur (40) déduisant une température ressentie à partir des valeurs de mesure qui lui sont communiquées.

9. Module de climatisation de toit (10) selon l'une des revendications précédentes, **caractérisé en ce qu'**il comprend une interface radio (42).
